# EUROPÄISCHE PATENTSCHRIFT

(11) **EP 0 453 460 B1**
(45) Veröffentlichungstag und Bekanntmachung des Hinweises auf die Patenterteilung: **03.02.1993**
(21) Anmeldenummer: 90901585.1
(22) Anmeldetag: 05.01.1990
(51) Int. Cl.: C10L 5/40, C10L 5/48

(54) **VERFAHREN ZUR ENTSORGUNG VON LACK- UND FARBSCHLÄMMEN SOWIE FARBMITTELABFÄLLEN**
PROCESS FOR DISPOSING OF VARNISH OR PAINT SLUDGES AND WASTE PRODUCTS OF COLOURING AGENTS
PROCEDE POUR TRAITER LES BOUES DE VERNIS ET PEINTURES AINSI QUE LES DECHETS DE COLORANTS

(30) Priorität: 10.01.1989 DE 3900482
(43) Veröffentlichungstag der Anmeldung: 30.10.1991
(73) Patentinhaber: GFR Gesellschaft für die Aufbereitung und Verwertung von Reststoffen mbH, 97080 Würzburg (DE); VW KRAFTWERK GMBH, 38440 Wolfsburg (DE)
(72) Erfinder: WEISSFLOG, Eckhard, D-8700 Würzburg (DE); DEMMICH, Jörg, D-6464 Linsengericht 4 (DE); NAHERM, Anton, D-3180 Wolfsburg 1 (DE); NAGEL, Ulf, D-3180 Wolfsburg 1 (DE)
(74) Vertreter: Werner, Hans-Karsten, Dr.Dipl.-Chem.
(86) Internationale Anmeldenummer: EP9000020
(87) Internationale Veröffentlichungsnummer: WO9008178

(56) Entgegenhaltungen:
- DE-A- 2 451 038
- DE-A-14 716 00
- DE-A-29 351 03

## Beschreibung

Gegenstand der vorliegenden Erfindung ist ein Verfahren zur Entsorgung von Lack- und Farbschlämmen sowie Farbmittelabfällen insbesondere aus der Automobilindustrie aber auch aus anderen Industriezweigen, in denen größere Mengen dieser problematischen Abfälle anfallen und bisher nur dadurch entsorgt werden können, daß sie auf Sonderdeponien verbracht werden. Bekanntlich ist der Raum in Sonderdeponien beschränkt und kostspielig, so daß ein dringendes Bedürfnis dafür besteht, bisher nur in Sonderdeponien entsorgbare Abfälle zu vermeiden bzw. sie unter stofflicher/energetischer Verwertung umweltverträglich zu beseitigen.

Lack- und Farbschlämme aber auch Farbmittelabfälle enthalten im allgemeinen mehr oder weniger große Mengen verdampfbarer Lösungsmittel, mehr oder weniger hochpolymere Bindemittel, anorganische und/oder organische Farbstoffe und/oder Pigmente. In vielen Fällen enthalten sie auch noch nicht unerhebliche Mengen an Schwermetallen, so daß sie bei unsachgemäßer Deponierung das Grundwasser gefährden können. Versuche, diese problematischen Abfallstoffe zu verbrennen, sind bisher daran gescheitert, daß diese Abfallstoffe meist zäh und klebrig sind und nicht einmal unter Zusatz von weiteren Lösungsmitteln soweit gelöst oder suspendiert werden können, daß sie problemlos in die Verbrennungsanlagen eindosiert werden können. Weiterhin entstehen bei der Verbrennung meist problematische und nur schwer zu reinigende Abgase, so daß dieser Weg der Entsornung als ungeeignet erschien und nur in Sonderfällen einneitlicher und unproblematischer Zusammensetzung zur Anwendung gekommen ist.

Die Erfindung hat sich die Aufgabe gestellt, ein Verfahren zur Entsorgung von Lack- und Farbschlämmen sowie Farbmittelabfällen insbesondere aus der Automobilindustrie zu entwickeln, welches allgemein anwendbar ist und zu Abfallstoffen führt, die unproblematisch und preiswert entsorgt werden können.

Diese Aufgabe kann überraschend einfach dadurch gelöst werden, daß die Abfälle vermahlen und mit mindestens der gleichen Gewichtsmenge kohlenstaub vermischt verbrannt werden.

In einer besonderen Ausführungsform des erfindungsgemäßen Verfahrens werden die Abfälle erst nach weitgehender Abtrennung der verdampfbaren Lösungsmittel vermahlen.

Eine Abtrennung verdampfbarer Lösungsmittel erfolgt im allgemeinen nur dann, wenn dies beispielsweise durch leichtes Erwärmen und Absaugen gegebenenfalls unter vermindertem Druck möglich ist und die dabei anfallenden Lösungsmitteldämpfe ohne weiteres zurückgewonnen oder problemlos verbrannt werden können. Insbesondere wenn bereits eine Aufbereitungs- oder Rückgewinnungsanlage für Lösungsmitteldämpfe vorhanden ist, kann es sinnvoll und wirtschaftlich sein, verdampfbare Lösungsmittel mehr oder weniger weitgehend abzutrennen und somit separat aufzuarbeiten. Erfindungsgemäß können aber auch verdampfbare Lösungsmittel in den Abfällen verbleiben und zusammen mit den übrigen komponenten der Lack- und Farbschlämme sowie Farbmittelabfälle entsorgt werden.

Insbesondere wenn der Gehalt an verdampfbaren Lösungsmitteln relativ hoch ist und auch die übrigen komponenten zu besonders klebrigen und zähen Abfällen führen, muß das Vermahlen unter kühlung erfolgen. Als besonders geeignet hat sich die kühlung der Abfälle mit flüssigem Stickstoff erwiesen. Alle bisher untersuchten Lack- und Farbschlämme aus der Automobilindustrie konnten zumindest unter kühlung mit Stickstoff problemlos ausreichend fein vermahlen werden.

Erfindungsgemäß werden diese vermahlenen Abfallstoffe in einer besonderen Ausführungsform mit mindestens der gleichen Gewichtsmenge kohlenstaub sowie gegebenenfalls alkalischen Zuschlagstoffen, vorzugsweise Branntkalk und/oder Kalksteinmehl vermischt und verbrannt.

Als kohlenstaub können die üblicherweise in kraftwerken anfallenden Kohlenstaubqualitäten verwendet werden. Gewünschtenfalls kann aber auch eine intensivere und feinere Vermahlung erfolgen. Je feinteiliger der kohlenstaub ist, um so größere Mengen an verdampfbaren Lösungsmitteln können durch ihn gebunden werden.

Der Zusatz an alkalischen Zuschlagstoffen, vorzugsweise Branntkalk und/oder Kalksteinmehl erfolgt insbesondere dann, wenn die Abfallstoffe, Schwermetalle und/ oder Schwefelverbindungen enthalten. Die Menge an alkalischen Zuschlagstoffen, vorzugsweise Branntkalk und/oder Kalksteinmehl sollte, bezogen auf den Gehalt an Schwermetallen und/oder Schwefelverbindungen überstöchiometrisch sein, um eine ausreichende Einbindung dieser komponenten in der Asche zu gewährleisten und ein Entweichen dieser komponenten mit den Abgasen in die Atmosphäre zu unterbinden. Der Zusatz von Branntkalk empfiehlt sich auch dann, wenn die Abfälle als verdampfbare Lösungsmittel erhebliche Mengen Wasser enthalten, da dieses beim Vermischen mit dem Branntkalk reagieren kann und somit nicht mehr durch feinteiligen kohlenstoff gebunden werden muß.

Gemäß einer bevorzugten Ausgestaltung des Verfahrens wird das Gemisch aus vermahlenen Abfällen und kohlenstaub sowie gegebenenfalls alkalischen Zuschlagstoffen, vorzugsweise Branntkalk und/oder Kalksteinmehl brikettiert. Diese Briketts sind problemlos lagerfähig und können bei Bedarf in entsprechenden Verbrennungsanlagen direkt verbrannt werden. Sofern beabsichtigt ist, die Verbrennung in Kohlenstaubverbrennungsanlagen durchzuführen, können diese Briketts gegebenfalls erneut vermahlen werden. Der dabei anfallende Brikettstaub kann dann für sich allein oder im Gemisch mit weiterem kohlenstaub problemlos verbrannt werden.

Gemäß einer weiteren Ausgestaltung des Oberbegriffs des erfindungsgemäßen Verfahrens kann in dem Gemisch aus vermahlenem Abfällen und kohlenstaub sowie gegebenenfalls Branntkalk und/oder Kalksteinmehl bis zu 50 Gew.-% des Kohlenstaubs ersetzt werden durch feinteilige Stoffe aus Verbrennungsanlagen, welche einen erhöhten Gehalt an unverbranntem kohlenstoff und/oder freiem Calciumoxid und/oder ungesinterten Tonmineralien aufweisen. Derartige feinteilige Reststoffe aus Verbrennungsanlagen sind ihrerseits nur problematisch und kostspielig zu entsorgen. Beispielsweise sind Aschen mit einem erhöhten Gehalt an unverbranntem kohlenstaub ungeeignet, in der Baustoffindustrie eingesetzt zu werden. Bei dem erfindungsgemäßen Verfahren wird dieser unverbrannte kohlenstoff erneut einer Verbrennungsanlage zugeführt und dabei sogar zur Energiegewinnung mitherangezogen. Weitere problematische Reststoffe aus Verbrennungsanlagen können solche sein, die einen erheblichen Anteil an freiem Calciumoxid aufweisen. Es handelt sich hierbei insbesondere um Rückstände aus Trockenadditivverfahren. Auch hierbei fallen Qualitäten an, die nicht oder nur schwer in der Baustoffindustrie eingesetzt werden können. Gerade durch ihren Gehalt an freiem Calciumoxid sind sie hingegen ausgezeichnet geeignet, beim erfindungsgemäßen Verfahren eingesetzt zu werden, insbesondere wenn es sowieso notwendig ist, Branntkalk und/oder Kalksteinmehl zuzumischen, um schwermetallhaltige und/oder schwefelhaltige Abfälle erfindungsgemäß verbrennen zu können. Schließlich können auch Reststoffe aus Verbrennungsanlagen mit einem erhöhten Gehalt an ungesinterten Tonmineralien eingesetzt werden. Zu diesen Reststoffen zählen insbesondere Wirbelschichtaschen aus kohlen mit einem hohen Gehalt an Tonmineralien. Derartige Wirbelschichtaschen sind bisher nicht oder nur schwierig verwertbar. Beim erfindungsgemäßen Verfahren sind sie in der Lage, zumindest einen Teil der flüssigen komponenten der Abfälle beim Vermischen absorptiv zu binden und dadurch die Zwischenlagerung sowie gegebenenfalls Brikettierung zu erleichtern. Bei der anschließenden erfindungsgemäßen Verbrennung entstehen so hohe Temperaturen, daß die absorbierten komponenten wieder abgegeben und die Anteile an Tonmineralien gesintert beziehungsweise aufgeschmolzen werden. Darüber hinaus wird durch Verwendung der oben genannten Reststoffe bzw. anderer alkalischer Zuschläge die Freisetzung von Schwermetallen beim Verbrennungsprozeß weitgehend verhindert. Insbesondere bei Schmelzkammerfeuerungen werden damit die in den Lack-und Farbschlämmen bzw. Farbmittelabfällen enthaltenen Schwermetalle durch Verglasung im Granulat immobilisiert.

Der Gehalt an derartigen problematischen Reststoffen aus Verbrennungsanlagen kann bis zu 50 Gew.-% des Kohlenstaubs betragen. Bei einem höheren Gehalt besteht das Risiko, daß die erfindungsgemäßen Gemische bei der Verbrennung nicht mehr genügend Energie freisetzen, um ausreichende hohe Verbrennungstemperaturen zu gewährleisten.

Obwohl in vielen Fällen bereits der Zusatz der gleichen Gewichtsmenge kohlenstaub zu den Abfällen ausreicht, ist es aus den oben genannten Gründen vorteilhaft, daß das Gemisch bezogen auf den Gehalt an Abfällen die zwei- bis zehnfache Menge kohlenstaub enthält. Insbesondere bei höherem Gehalt an kohlenstaub in dem zu verbrennenden Gemisch können erfindungsgemäß auch problematische Reststoffe aus Verbrennungsanlagen mitverwendet und mitentsorgt werden.

Das erfindungsgemäße Verfahren ist in den nachfolgenden Beispielen näher erläutert.

### Beispiel 1

Lackschlamm aus einer Automobilfabrik wurde unter kühlung mit flüssigem Stickstoff vermahlen und mit der dreifachen Menge kohlenstaub aus dem Kraftwerk vermischt und brikettiert. Es entstanden gut aufmahlbare Briketts, die sich problemlos verbrennen ließen.

### Beispiel 2

Lackschlamm aus der Metallic-Lackierung einer Automobilfabrik wurde unter kühlung mit flüssigem Stickstoff fein vermahlen und mit der dreifachen Menge kohlenstaub aus der Kraftwerksmühle vermischt und brikettiert. Die Briketts waren gut aufmahlbar und konnten problemlos verbrannt werden. In einem weiteren Versuch wurde dem Gemisch 10 % Branntkalk zugemischt. Auch dieses Gemisch war gut brikettierbar, aufmahlbar und verbrennbar.

### Beispiel 3

Eine andere Qualität eines Lackschlammes, der sich auch ohne Kühlung bei Raumtemperatur zerkleinern bzw. vermischen ließ, wurde mit der dreifachen Menge kohlenstaub aus der Kohlenmühle und 20 % Calciumoxid vermischt und brikettiert. Während des Mischens wurde eine deutliche Temperaturerhöhung beobachtet, die auf die Umsetzung von Calciumoxid mit dem Wassergehalt des Lackschlamms und des Kohlenstaubs zurückzuführen war. Auch die so erhaltenen Briketts waren gut aufmahlbar und konnten problemlos verbrannt werden.

## Patentansprüche

1. Verfahren zur Entsorgung von Lack- und Farbschlämmen sowie Farbmittelabfällen insbesondere aus der Automobilindustrie, dadurch gekennzeichnet, daß die Abfälle vermahlen und mit mindestens der gleichen Gewichtsmenge Kohlenstaub vermischt verbrannt werden.

2. Verfahren gemäß dem Oberbegriff des Anspruchs 1, dadurch gekennzeichnet, daß in dem Gemisch bis zu 50 Gew.-% des Kohlenstaubs ersetzt wird durch feinteilige Reststoffe aus Verbrennungsanlagen, welche einen erhöhten Gehalt an unverbranntem Kohlenstoff und/ oder freiem Calciumoxid und/oder ungesinterten Tonmineralien aufweisen.

3. Verfahren gemäß Anspruch 1 oder 2, dadurch gekennzeichnet, daß das Gemisch aus vermahlenen Abfällen und Kohlenstaub brikettiert wird.

4. Verfahren gemäß einem der Ansprüche 1 bis 3, dadurch gekennzeichnet, daß das Gemisch bezogen auf den Gehalt an Abfällen die zwei- bis zehnfache Menge Kohlenstaub enthält.

5. Verfahren gemäß einem der Ansprüche 1 bis 4, dadurch gekennzeichnet, daß das Gemisch zusätzlich alkalische Zuschlagstoffe, vorzugsweise Branntkalk und/oder Kalksteinmehl enthält.

6. Verfahren gemäß Anspruch 3, dadurch gekennzeichnet, daß das brikettierte Gemisch erneut vermahlen wird.

7. Verfahren gemäß einem der Ansprüche 1 bis 6, dadurch gekennzeichnet, daß die Abfälle unter Kühlung vermahlen werden.

8. Verfahren gemäß einem der Ansprüche 1 bis 7, dadurch gekennzeichnet, daß die Abfälle erst nach weitgehender Abtrennung der verdampfbaren Lösungsmittel vermahlen werden.

## Claims

1. A process for the disposal of varnish sludges and paint sludges as well as waste products of colouring agents, in particular those derived from the automotive industry, characterized in that the waste materials are ground and, after mixing with at least the same amount by weight of pulverized coal, are subjected to combustion.

2. The process according to the preamble of claim 1, characterized in that in the mixture an amount of up to 50% by weight of the pulverized coal is replaced with finely divided residual materials from combustion plants, which materials comprise elevated contents of unburnt carbon and/or free calcium oxide and/or unsintered clay minerals.

3. The process according to claim 1 or 2, characterized in that the mixture comprising ground waste materials and pulverized coal is briquetted.

4. The process according to any of claims 1 to 3, characterized in that the mixture contains from two to ten times the amount of puverized coal, relative to the amount of waste materials.

5. The process according to any of claims 1 to 4, characterized in that the mixture additionally contains alkaline additives, preferably caustic lime and/or limestone meal.

6. The process according to claim 3, characterized in that the briquetted mixture is once more ground.

7. The process according to any of claims 1 to 6, characterized in that the waste materials are ground while cooled.

8. The process according to any of claims 1 to 7, characterized in that the waste materials are ground after an extensive removal therefrom of the vapourable solvents.

## Revendications

1. Procédé d'élimination des boues de vernis et de peintures ainsi que des déchets de colorants, notamment dans l'industrie automobile, caractérisé en ce que les déchets sont broyés et brûlés en étant mélangés avec au moins la même quantité en poids de poussière de charbon.

2. Procédé selon le préambule de la revendication 1, caractérisé en ce que, dans le mélange, jusqu'à 50 % en poids de la poussière de charbon sont remplacés par des résidus finement divisés provenant d'installations de combustion, qui ont une teneur augmentée en carbone non brûlé et/ou en oxyde de calcium libre et/ou en minéraux argileux non frittés.

3. Procédé selon la revendication 1 ou 2, caractérisé en ce que le mélange de déchets broyés et de poussière de charbon est transformé en briquettes.

4. Procédé selon une des revendications 1 à 3, caractérisé en ce que le mélange contient une quantité de poussière de charbon égale à deux a dix fois la quantité de déchets.

5. Procédé selon une des revendications 1 à 4, caractérisé en ce que le mélange contient en outre des charges alcalines, de préférence de la chaux vive et/ou de la poudre de pierre à chaux.

6. Procédé selon la revendication 3, caractérisé en ce que le mélange transformé en briquettes est broyé de nouveau.

7. Procédé selon une des revendications 1 à 6, caractérisé en ce que les déchets sont broyés avec refroidissement.

8. Procédé selon une des revendications 1 à 7, caractérisé en ce que les déchets ne sont broyés qu'après une élimination poussée des solvants évaporables.
